## Europäisches Patentamt

## European Patent Office

## Office européen des brevets

(11) Veröffentlichungsnummer: **0 525 302 B1**

# EUROPÄISCHE PATENTSCHRIFT

(45) Veröffentlichungstag der Patentschrift: **01.03.95**

(51) Int. Cl.⁶: **B27K 3/44**

(21) Anmeldenummer: **92106124.8**

(22) Anmeldetag: **09.04.92**

(54) **Geruchsarmes aromatisches Imprägnieröl mit verminderter Verdunstungsneigung.**

(30) Priorität: **03.07.91 DE 4121956**

(43) Veröffentlichungstag der Anmeldung:
**03.02.93 Patentblatt 93/05**

(45) Bekanntmachung des Hinweises auf die
Patenterteilung:
**01.03.95 Patentblatt 95/09**

(84) Benannte Vertragsstaaten:
**AT BE CH DE DK ES FR GB GR IT LI LU NL PT
SE**

(56) Entgegenhaltungen:
**EP-A- 0 465 434
DE-A- 153 585
GB-A- 2 139 242**

**Week 7822, Derwent Publications Ltd., London, GB; AN 78-39939A; & SU-A-565 026**

(73) Patentinhaber: **RÜTGERSWERKE AKTIENGE-
SELLSCHAFT
Mainzer Landstrasse 217
D-60326 Frankfurt (DE)**

(72) Erfinder: **Hillner, Knut, Dr.
Baroper Strasse 354
W-4600 Dortmund 50 (DE)**
Erfinder: **Döhr, Wolfgang
Sternstrasse 7
W-4100 Duisburg 18 (DE)**
Erfinder: **Schäferling, Heinz
Hülskathstrasse 19
W-4200 Oberhausen (DE)**
Erfinder: **Stolzenberg, Konrad, Dr.
Mühlenstrasse 45
W-4355 Waltrop (DE)**
Erfinder: **Alscher, Arnold, Dr.
Speckmannstrasse 27
W-2000 Hamburg 65 (DE)**

**Beschreibung**

Die Erfindung betrifft ein neues, aromatisches Imprägnieröl mit erheblich vermindertem Geruch und verringertem Benzo[a]pyrengehalt, sowie erhöhter Wirksamkeit gegen Pilzbefall.

Die Herstellung und Verwendung aromatischer Imprägnieröle, insbesondere steinkohlenteerstämmiger Öle für Holzschutzmittel, sind seit langem bekannt.

Entsprechende Imprägnieröle sind Gemische der bei der Destillation von Steinkohlenteer anfallenden Fraktionen im Siedebereich von 180 bis vorzugsweise 450 °C. Häufig werden jedoch auch weitere Bestandteile wie z. B. Steinkohlenteer selbst oder mineralölstämmige Fraktionen zugesetzt (Mahlke-Troschel, Handbuch der Holzkonservierung, Springer-Verlag, Berlin, Göttingen, Heidelberg/1950).

Im allgemeinen werden bei der Herstellung von aromatischen Imprägnierölen unterschiedlich siedende Anteile aus Steinkohlenteer eingesetzt, um die erforderlichen anwendungstechnischen Eigenschaften, insbesondere Fluidität, Verdunstungsverhalten, Alterungsbeständigkeit und Wirksamkeit, einzustellen. So werden für Imprägnieröle nach den westeuropäischen Beschaffenheitsvorschriften (Westeuropäisches Institut für Holzimprägnierung (WEI), westeuropäische Lieferbedingungen für Imprägnieröl aus Steinkohlenteer (WEI-Spezifikation 1982, 3. Ausgabe 1989)) Imprägnieröle mit niedrigsiedenden Anteilen von 180 bis 235 °C, Anteilen eines mittleren Siedebereichs von 235 bis 300 °C, sowie Anteilen eines höheren Siedebereich bis 355 °C verwendet. Dem über 355 °C siedenden Anteil kommt insbesondere Bedeutung wegen des fixierenden Charakters und der damit verbunden Langzeitwirkung zu. Allerdings sind in diesem Siedeschnitt auch polycyclische aromatische Kohlenwasserstoffe, wie z. B. das als Leitkomponente für cancerogene aromatische Kohlenwasserstoffe benutzte Benzo[a]pyren, vorhanden.

So liegt beispielsweise der Wert für Imprägnieröle (Creosote) nach amerikanischen Vorschriften ASTM P1, P7, P13 weit über 1.000 ppm Benzo[a]pyren, für neuere Imprägnieröle gemäß WEI-Typ A sind Werte bis 500 ppm üblich.

Als nachteilig und unangenehm wird von vielen Anwendern auch der starke Eigengeruch aromatischer Imprägnieröle empfunden (Willeitner, H., Dieter, H. O., Holz als Roh- und Werkstoff 42 (1984), 223 bis 232).

Bekannte Verfahren zum Desodorieren von Mineralölen oder Teerölen sind gekennzeichnet durch die Zugabe von erheblichen Mengen an Hilfschemikalien. So wurde 1902 zu diesem Zweck ein Verfahren patentiert (DRP 147 163), bei dem unter Zusatz von Carbonylverbindungen, wie z. B. Formaldehyd oder Aceton oder deren Gemische, in Gegenwart von Säuren oder Alkalien Wasserdampf eingeleitet wird. Mit dem gleichen Ziel werden nach DRP 153 585 (1903) Teeröle unter Zusatz von Schwermetalloxiden, -hydroxiden oder -salzlösungen und Alkalisalzen mit Wasserdampf behandelt.

In einem anschließendem Verfahrensschritt müssen die zugesetzten Hilfschemikalien jedoch wieder aus dem Teeröl entfernt werden und die abgetrennten, nicht wieder verwendbaren Schwermetallverbindungen aufwendig entsorgt werden.

Aufgabe der Erfindung ist es daher, in einem einfachen Verfahren ein Holzschutzmittel auf der Basis aromatischer, imprägnierender Öle herzustellen, die bei gleicher oder verbesserter Schutzwirkung im Vergleich zu den derzeitig verwendeten aromatischen und/oder steinkohlenteerstämmigen Imprägnierölen bei verringertem Geruch ein vermindertes Verdunstungsverhalten und einen niedrigen Gehalt an polycyclischen Aromaten, insbesondere an cancerogenem Benzo[a]pyren, aufweist.

Die Lösung der Aufgabe erfolgt durch ein Verfahren gemäß Anspruch 1 und seiner besonderen Ausführung gemäß der Ansprüche 2 bis 7, sowie durch die Verwendung der hergestellten Produkte als Holzschutzmittel gemäß der Ansprüche 1 bis 12.

Polycyclische Aromaten, insbesondere solche mit mehr als vier kondensierten Benzolkernen, sind im Steinkohlenteer vorwiegend in den hochsiedenden Fraktionen mit einem Siedebereich oberhalb von 370 °C enthalten. Benzo a pyren siedet beispielsweise bei 496 °C ($10^5$ Pa), tritt aber in geringeren Mengen bei destillativer Aufarbeitung auch in Siedeschritten niedrigerer Temperaturbereiche auf.

Die geruchsverursachenden, relativ flüchtigen Bestandteile von aromatischen Imprägnierölen sind dagegen vornehmlich in dem niedrigsiedenden Fraktionsbereich bis 270 °C vorhanden. Ein gewisser Anteil an leichter flüchtigen Komponenten im Imprägnieröl ist jedoch zwingend erforderlich, um die benötigte Fluidität des Imprägnieröls zu garantieren.

Bei Verwendung konventioneller Imprägnieröle verdunsten innerhalb der ersten drei bis zehn Jahre 20 bis 50 % der Aromaten aus dem imprägnierten Holz aufgrund des Siedeverlaufs der eingesetzten Öle (Hartford, W. H., Nicholas, D. D. in Wood Deterioration and Its Prevention by Preservative Treatments, Vol. II: Preservatives and Preservative Systems, S. 123 ff, Syracuse University Press, 1973).

Die Abtrennung der geruchsverursachenden Substanzen aus den für einen effektiven Holzschutz besonders wirksamen, mittelsiedenden Teerölfraktionen, insbesondere aus dem Siedebereich von 200 bis 270 °C, ist destillativ nicht möglich bzw. mit einem hohen technischen Aufwand und hohen Kosten verbunden.

Überraschenderweise wurde nun gefunden, daß mittel- bis hochsiedende Teerölfraktionen mit einem typischen teerartigen Geruch, sogenannte Anthracenöle, von geruchsintensiven Aromaten durch Wasserdampfbehandlung in Gegenwart von Luft oder Inertgas weitgehend befreit werden können. Gleichzeitig wurde gefunden, daß hierdurch in hohem Maße die Imprägnierölbestandteile abgetrennt werden können, die durch Langzeitemission aus dem imprägnierten Holz entweichen und dadurch die Wirksamkeit auf Dauer herabsetzen. Dieser Effekt war insofern nicht zu erwarten, da der größte Teil der in mittel- bis hochsiedenden Fraktionen enthaltenen Verbindungen wasserdampfflüchtig ist, im durchgeführten Verfahren jedoch in erster Linie vorwiegend nur geruchsintensive und flüchtige Bestandteile abgetrennt werden.

Die Wirkung wird ohne Zusatz von chemischen Hilfsstoffen in einem vereinfachten Verfahren erzielt. Die Geruchsintensität der erfindungsgmäß hergestellten Imprägnieröle liegt gegenüber konventionellen aromatischen Imprägnierölen (Creosote) qualitativ erheblich niedriger. Olfaktorische Messungen (DIN 10963) ergaben eine Reduzierung des Geruchsschwellenwerts der erfindungsgemäßen aromatischen Imprägnieröle um mehr als 40 % gegenüber üblicherweise verwendeten Ölen.

Versuche unter zeitraffenden Bedingungen nach DIN 53170 ergaben weiterhin, daß die erfindungsgemäßen, neuen Imprägnieröle neben der verringerten Geruchsintensität eine um mehr als 90 % verminderte Verdunstung aufweisen gegenüber konventionellen. Daher wird zur Imprägnierung gleicher Mengen Holz weniger Imprägnieröl benötigt, das eine verlängerte Wirksamkeit aufweist. Weiterhin wurde gefunden, daß Hölzer, die mit dem erfindungsgemäßen Öl imprägniert sind, kein Ausbluten zeigen im Gegensatz zu solchen, die mit üblicherweise verwendeten Mitteln behandelt worden sind. Sie weisen vergleichsweise extrem trockene Holzoberflächen auf.

Nach dem erfindungsgemäßen Verfahren erhaltene Imprägnieröle zeigen daher wesentlich verbesserte Umwelteigenschaften, da sie erheblich geringere Aromaten- und Geruchsemissionen zeigen, gleichtzeitig aber auch schwermetall- und halogenfrei sind.

Im erfindungsgemäßen Verfahren können Teerölfraktionen oder vergleichbare aromatische Stoffgemische eingesetzt werden, die zwischen 100 und 450 °C sieden, insbesondere zwischen 200 bis 400 °C. Besonders bevorzugt werden Siedefraktionen von 250 bis 370 °C verwendet.

Zur Durchführung des erfindungsgemäßen Verfahrens werden geeignete Teerölfraktionen, -fraktionsgemische oder geeignete Aromatengemische anderen Ursprungs mit Wasserdampf in Gegenwart von Luft oder Inertgas bei Temperaturen zwischen 130 bis 350 °C, bevorzugt bei 150 bis 230 °C behandelt. Die Gase und der Wasserdampf werden in an sich bekannter Weise vorzugsweise unter Rühren eingeleitet (Winnacker, K., Küchler, L., Chemische Technologie, Bd. 7, S. 176 f, C. Hanser-Verlag München, 1975). Bis zu einer Temperatur von 300 °C abgetriebene Bestandteile werden auskondensiert, vom Kondensatwasser abgetrennt und geeigneten Verwendungen zugeführt.

Das Mengenverhältnis der eingesetzten Aromatenfraktion zur benötigten Menge Wasserdampf kann 1 : 10 bis 10 : 1 betragen. Üblicherweise beträgt das Verhältnis 5 : 1 bis 1 : 1. Die Dauer der Wasserdampfbehandlung ist abhängig von der Durchmischungsintensität und den Temperaturbedingungen. Im allgemeinen beträgt sie 2 Stunden pro Kubikmeter eingesetzter Aromatenfraktionen.

Die beschriebene Behandlung mit Wasserdampf kann ebenso ohne Probleme kontinuierlich durchgeführt werden. Das Einsatz/Wasserdampf-Verhältnis beträgt in diesem Fall etwa 3,5 : 1. Die erhaltenen Produkte sind in ihren Eigenschaften vergleichbar mit denen aus der diskontinuierlichen Fahrweise.

Auf diese beschriebene Weise behandelte aromatische Ölfraktionen können direkt oder nach entsprechender Vermischung mit anderen geeigneten Ölfraktionen als Imprägnieröle im Holzschutz eingesetzt werden.

Die Fluidität der erhaltenen Ölfraktionen kann, falls erforderlich, durch Zusatz von 0 bis 20 Gew.-%, vorzugsweise 5 bis 10 Gew.-% geeigneter, geruchsfreier aromatischer Öle erhöht werden. Zu diesem Zweck sind Aryl- oder Alkylnaphthaline, insbesondere deren Isomerengemische einsetzbar.

Ein optimaler Holzschutz wird erzielt, wenn die erfindungsgemäßen Imprägnieröle im Kesseldruck-Vakuum- oder im Heiß-Kalt-Verfahren eingesetzt werden. Die Kesseldruck-Vakuum-Imprägnierung erfolgt üblicherweise bei Temperaturen zwischen 70 bis 120 °C.

**Beispiele**

Beispiel 1 Imprägnieröle:

47,1 t eines Teeröls (Siedebereich 250 bis 400 °C) werden in einer Schleppdampfdestillation mit 13,8 t Wasserdampf (3 bar) 25 h bei einer Temperatur von 200 °C behandelt. Dabei werden 5,1 t organisches Destillat übergetrieben.

Der Gehalt der leichterflüchtigen Verbindungen im Siedebereich von Naphthalin bis Acenaphthen wird so von 3,3 auf 0,6 % (Abnahme 81 %) reduziert.

Das auf diese Weise hergestellte Produkt zeigt die in Tabelle 1 enthaltenen Kenndaten und die in Tabelle 2 sowie in Abb. 1 dargestellten Geruchseigenschaften.

Tabelle 1

| Kenndaten | | Imprägnieröl WEI A | Imprägnieröl (NEU) | Einsatz | Produkt (Beispiel 1) |
|---|---|---|---|---|---|
| Dichte (20 °C) | g/ml | 1,107 | 1,111 | 1,112 | 1,127 |
| Wassergehalt | Vol.% | 0,17 | 0,1 | 0,1 | 0,1 |
| Klarpunkt | °C | 12 | 35 | 34 | 43 |
| Saure Bestandteile | Vol.% | 2,3 | 2,7 | 2,9 | 3,0 |
| Unlösliche Bestandteile | | Spuren | Spuren | Spuren | Spuren |
| Flammpunkt (DIN 51758) | °C | 100 | 116 | 100 | 100 |
| Viskosität bei | mPa s | | | | |
| 50 °C | | 9,9 | 11,4 | 9,1 | |
| 60 °C | | 5,5 | 8,1 | 6,1 | |
| 70 °C | | 5,9 | 6,0 | 4,7 | |
| 80 °C | | 4,5 | 4,7 | 3,6 | |
| 90 °C | | 3,6 | 3,7 | 2,7 | |
| 100 °C | | 3,0 | 3,1 | 2,5 | |
| 110 °C | | 2,4 | 2,5 | 2,1 | |
| 120 °C | | 2,1 | 2,2 | 2,0 | |
| 130 °C | | 1,9 | 1,9 | 1,8 | |
| Siedeanalyse (DIN 51751) | °C | | | | |
| Siedebeginn | | 205 | 289 | 160 | 294 |
| 10 Vol.% | | 245 | 304 | 304 | 309 |
| 20 Vol.% | | 263 | 308 | 320 | 312 |
| 30 Vol.% | | 281 | 311 | 331 | 318 |
| 40 Vol.% | | 304 | 318 | 340 | 322 |
| 50 Vol.% | | 321 | 326 | 345 | 328 |
| 60 Vol.% | | 331 | 332 | 353 | 334 |
| 70 Vol.% | | 341 | 343 | 361 | 342 |
| 80 Vol.% | | 354 | 352 | 372 | 348 |
| 90 Vol.% | | 365 | 370 | 387 | 360 |
| Siedeende | | 365 (90 %) | 388 (97 %) | 400 (96 %) | 372 (90 %) |

Fortsetzung Tabelle 1

4

EP 0 525 302 B1

| | | | | | |
|---|---|---|---|---|---|
| Siedeanalyse nach WEI | | | | | |
| bis 235 °C | Vol.% | 1 | 0 | 0 | 0 |
| bis 300 °C | | 28 | 0 | 4 | 0 |
| bis 355 °C | | 74 | 79 | 83 | 81 |
| Charakteristische chemische Inhaltstoffe: | | | | | |
| Naphthalin | Gew.% | 4,8 | 0,1 | 0,7 | 0,0 |
| 2-Methylnaphthalin | | 8,6 | 0,2 | 0,9 | 0,1 |
| 1-Methylnaphthalin | | 3,3 | 0,2 | 0,6 | 0,1 |
| Biphenyl | | 0,7 | 0,1 | 0,4 | 0,1 |
| Dimethylnaphthaline | | 1,2 | 0,6 | 0,9 | 0,4 |
| Acenaphthen | | 1,6 | 2,7 | 3,1 | 4,3 |
| Diphenylenoxid | | 1,8 | 3,4 | 3,5 | 2,4 |
| Fluoren | | 4,7 | 7,8 | 6,9 | 5,4 |
| Phenanthren | | 15,2 | 21,9 | 19,7 | 29,9 |
| Anthracen | | 2,8 | 2,1 | 1,9 | 1,1 |
| Fluoranthen | | 5,2 | 7,2 | 8,5 | 12,7 |
| Pyren | | 2,8 | 3,8 | 4,1 | 8,0 |
| Benzo a pyren | | 0,023 | 0,003 | 0,003 | 0,003 |

Tabelle 2

Ein sensorischer Vergleichstest nach DIN 10963
(Rangordnungsprüfung) zur Bestimmung des
Geruchsverhaltens ergab folgendes Ergebnis:

| Prüfer | nicht behandeltes Einsatzprodukt | erfindungsgemäßes Produkt | Imprägnieröl WEI A | WEI B | Zeilensumme |
|---|---|---|---|---|---|
| 1 | 3 | 1 | 4 | 2 | 10 |
| 2 | 3 | 1 | 4 | 2 | 10 |
| 3 | 3 | 1 | 4 | 2 | 10 |
| 4 | 2 | 1 | 4 | 3 | 10 |
| 5 | 3 | 1 | 4 | 2 | 10 |
| 6 | 3 | 1 | 4 | 2 | 10 |
| 7 | 3 | 1 | 4 | 2 | 10 |
| 8 | 2 | 1 | 4 | 3 | 10 |
| 9 | 2 | 1 | 4 | 3 | 10 |
| 10 | 3 | 1 | 4 | 2 | 10 |
| 11 | 2 | 1 | 4 | 3 | 10 |
| 12 | 3 | 1 | 4 | 2 | 10 |
| 13 | 2 | 1 | 4 | 3 | 10 |
| 14 | 3 | 1 | 4 | 2 | 10 |
| 15 | 3 | 1 | 4 | 2 | 10 |
| 16 | 3 | 1 | 4 | 2 | 10 |
| 17 | 2 | 1 | 4 | 3 | 10 |
| 18 | 3 | 1 | 4 | 2 | 10 |
| Spaltensumme | 38 | 18 | 72 | 42 | 180 |

starker Geruch     schwacher Geruch
4 Punkte     1 Punkt

Kritische Rangsummen für 4 Proben und 18 Wiederholungen
nach DIN 10963:

99 % Signifikanz:     34 bis 56
95 % Signifikanz:     37 bis 53

Somit riecht das erfindungsgemäße Produkt signifikant weniger als die zum Vergleich eingesetzten Öle, insbesondere der WEI-Typen.

Beispiel 2

Das gemäß Versuch 1 hergestellte Produkt wurde mit 10 Gew.-% einer Fraktion (Siedebereich 320 bis 350 °C) aus der Naphthalinpropylierung bei gleich bleibender Temperatur unter Rühren vermischt. Das auf diese Weise erhaltene Imprägnieröl (neu) zeigt die in Tabelle 1 enthaltene Kenndaten , sowie die in Tabelle 3 charakterisierten Geruchseigenschaften:

Tabelle 3

Ein sensorischer Vergleichstest nach DIN 10963 (Rangordnungsprüfung) zur Bestimmung des Geruchsverhaltens ergab folgendes Ergebnis:

| Prüfer | Einsatz | Impräg- nieröl (neu) | Imprägnier- öl WEI A | WEI B | Zeilensumme |
|--------|---------|----------|--------|--------|-------------|
| 1 | 2 | 1 | 4 | 3 | 10 |
| 2 | 2 | 1 | 4 | 3 | 10 |
| 3 | 3 | 1 | 4 | 2 | 10 |
| 4 | 2 | 1 | 4 | 3 | 10 |
| 5 | 3 | 1 | 4 | 2 | 10 |

| | | | | | |
|---|---|---|---|---|---|
| 6 | 2 | 1 | 4 | 3 | 10 |
| 7 | 2 | 1 | 4 | 3 | 10 |
| 8 | 2 | 1 | 4 | 3 | 10 |
| 9 | 3 | 1 | 4 | 2 | 10 |
| 10 | 2 | 1 | 4 | 3 | 10 |
| 11 | 2 | 1 | 4 | 3 | 10 |
| 12 | 3 | 1 | 4 | 2 | 10 |
| 13 | 2 | 1 | 4 | 3 | 10 |
| 14 | 2 | 1 | 4 | 3 | 10 |
| 15 | 2 | 1 | 4 | 3 | 10 |
| Spalten-summe | 34 | 15 | 60 | 41 | 150 |

```
            starker Geruch        schwacher Geruch
              4 Punkte               1 Punkt


Kritische Rangsummen für 4 Proben und 15 Wiederholungen
nach DIN 10963:    99 % Signifikanz:       28 bis 47
                   95 % Signifikanz:       30 bis 45
```

Beispiel 3

Das in Beispiel 2 erhaltene Imprägnieröl wurde zur Imprägnierung von 500 Kiefernholzschwellen nach dem Rüping-Verfahren (DB-Vorschrift) eingesetzt. Die so erhaltenen Holzschwellen nahmen im Mittel 60 kg/m$^3$ Imprägniermittel auf.

Die imprägnierte Zone der Hölzer war voll durchtränkt und die Oberfläche trocken, so daß kein Schwitzen oder Bluten auftrat.

Ein olkfaktometrischer Vergleich nach VDI-Richtlinie 3881, Blatt 1 bis 3, der Geruchsstoffkonzentration zwischen herkömmlichem Öl und neuem Öl zeigt deutlich eine Verminderung des Geruches an. Dabei wurden 10 x 10 x 30 cm, mit dem jeweiligen Imprägnieröl imprägnierte Holzstücke in Polyamidbeutel mit einem Volumen von 15 l eingeschweißt. Anschließend wurden die Beutel mit synthetischer Luft gefüllt. Nach einer Lagerzeit von 10 min wurden jeweils Luftproben gezogen und die Geruchsstoffkonzentration olfaktometrisch bestimmt. Aus den Ergebnissen ist abzulesen, daß die mit dem neuen Imprägnieröl behandelten Hölzer deutlich weniger Geruchsstoffe (43 %) emittieren als mit herkömmlichen Ölen behandelte.

| Probe Nr. | Ort der Probenahme | Geruchsstoffkonzentration - angegeben in GE*/m³ - Qualitätsparameter Mittel-wert Z 50 | Z 84 | Z 16 | Z UG | Z OG |
|---|---|---|---|---|---|---|
| 1 | unbehandeltes Holz | 130 | 100 | 180 | 160 | 110 |
| 2 | | 160 | 120 | 220 | 200 | 130 |
| 3 | mit neuem Imprägniermittel behandeltes Holz | 410 | 280 | 600 | 530 | 320 |
| 4 | mit WEI-A-Imprägniermittel behandeltes Holz | 340 | 190 | 590 | 490 | 230 |
| 5 | | 670 | 450 | 1.000 | 880 | 520 |
| 6 | | 650 | 530 | 810 | 750 | 570 |

GE* = Geruchseinheit

Wirksamkeitsprüfung

Die pilzwidrige Wirksamkeit von Holzschutzmitteln wird üblicherweise nach dem Klötzenverfahren bestimmt. Als Prüfverfahren werden die Vorschriften der DIN EN 113 angewandt. Von den verschiedenen Prüfpilzen ist für aromatische Imprägnieröle für Kiefernholz Lentinus lepideus als resistentester Pilz am besten geeignet.

Die holzschützende Wirkung wird durch den Bereich zwischen zwei Grenzwerten angegeben. Der kleinere Wert gibt die Schutzmittelmenge an, die das Holz gerade nicht mehr ausreichend schützt, der höhere Wert stellt die kleinste Schutzmittelmenge dar, die das Holz gerade noch schützt.

Da es sich hierbei um biologische Prüfungen mit relativ großer Schwankungsbreite handelt, ist eine gewisse Streuung bei der vergleichenden Wertung zu berücksichtigen. Weitere wichtige Eigenschaften von Imprägnierölen sind die Eindringfähigkeit in Holz und die Dauerhaftigkeit der Imprägnier-Wirkung. Zu ihrer Bestimmung werden DIN 51168 (Eindringtiefe) und die biologische Wirksamkeitsprüfung in Verbindung mit der Auswaschbarkeit nach DIN EN 113/EN 84.

Imprägnieröl (neu), hergestellt, wie in Beispiel 2 beschrieben:

| Pilz | Schutzmittelmenge DIN EN 113 | DIN EN 113/84 |
| --- | --- | --- |
| Poria monticola | 5,1 ... 8,4 kg/m³ | 8,5 ... 12,9 kg/m³ |
| Coniophora puteana | 3,3 ... 5,5 kg/m³ | 5,8 ... 8,5 kg/m³ |
| Lentinus lepideus | 13,3 ... 21,8 kg/m³ | 13,5 ... 20,8 kg/m³ |

Imprägnieröl, (herkömmlich)

| Pilz | Schutzmittelmenge DIN EN 113 | DIN EN 113/84 |
| --- | --- | --- |
| Lentinus lepideus | 28,8 ... 37,3 kg/m³ | 29,2 ... 39,2 kg/m³ |

**Patentansprüche**

1. Verfahren zur Herstellung von geruchsarmen Holzschutzmitteln mit verlängerter Wirksamkeit auf der Basis aromatischer, imprägnierender Öle mit besonders niedrigem Benzo a pyren-Gehalt, dadurch gekennzeichnet, daß mittel- bis hochsiedende Teerölfraktionen, sogenannte Anthracenöle, mittel- bis hochsiedende Teerölfraktionsgemische oder mittel- bis hochsiedende Aromatengemische anderen Ursprungs ohne Zusatz von chemischen Hilfsstoffen in Gegenwart von Luft oder Inertgas unter Rühren bei 130 bis 250° C mit Wasserdampf behandelt werden.

**2.** Verfahren gemäß Anspruch 1, dadurch gekennzeichnet, daß die Wasserdampfbehandlung bei 150 bis 230 °C durchgeführt wird.

**3.** Verfahren gemäß Anspruch 1 und 2, dadurch gekennzeichnet, daß Teerölfraktionen des Siedebereichs von 100 bis 450 °C behandelt werden.

**4.** Verfahren gemäß Anspruch 1 und 2, dadurch gekennzeichnet, daß Teerölfraktionen des Siedebereichs von 250 bis 370 °C behandelt werden.

**5.** Verfahren gemäß der Ansprüche 1 bis 4, dadurch gekennzeichnet, daß bei einer Behandlungsdauer von 2 Stunden pro Kubikmeter eingesetzter Aromatenfraktion Wasserdampf im Mengenverhältnis 1:10 bis 10:1, vorzugsweise 5:1 bis 1:1, bezogen auf die Aromatenfraktion eingeleitet wird.

**6.** Verfahren gemäß der Ansprüche 1 bis 4, dadurch gekennzeichnet, daß die Durchführung kontinuierlich erfolgt.

**7.** Verfahren gemäß Anspruch 6, dadurch gekennzeichnet, daß die Aromatenfraktion mit Wasserdampf etwa im Verhältnis 3,5:1, bezogen auf die eingesetzte Menge, behandelt wird.

**8.** Verwendung zum Holzschutz der nach einem Verfahren gemäß der Ansprüche 1 bis 7 hergestellten Holzschutzmittel unter Zusatz von 0 bis 20 Gew.-% Aryl-, Alkylnaphthalinen oder deren Isomerengemische.

**9.** Verwendung zum Holzschutz der nach einem Verfahren gemäß der Ansprüche 1 bis 7 hergestellten Holzschutzmittel unter Zusatz von 5 bis 10 Gew.-% Aryl-, Alkylnaphthalinen oder deren Isomerengemische.

**10.** Verwendung zum Holzschutz der nach einem Verfahren gemäß der Ansprüche 1 bis 7 hergestellten Holzschutzmittel unter Zusatz von 5 bis 10 Gew.-% einer Fraktion (Siedebereich: 320 bis 350 °C) aus der Naphthalinpropylierung.

**11.** Verwendung zum Holzschutz der nach einem Verfahren gemäß der Ansprüche 1 bis 7 hergestellten Holzschutzmittel im Kesseldruck-Vakuum-Imprägnierverfahren bei Temperaturen zwischen 70 bis 120 °C.

**12.** Verwendung der nach einem Verfahren gemäß der Ansprüche 1 bis 7 hergestellten Holzschutzmittel zur Holzimprägnierung im Heiß-Kalt-Verfahren.

**Claims**

**1.** Process for the preparation of low-odour wood preservatives having extended effectiveness based on aromatic impregnating oils having particularly low benzo[a]pyrene content, characterised in that middle- to high-boiling creosote fractions known as anthracene oils, middle- to high-boiling creosote fraction mixtures or middle- to high-boiling aromatic mixtures of other origin are treated with steam at from 130 to 250 °C in the presence of air or inert gas, with stirring, without addition of auxiliary chemicals.

**2.** Process according to Claim 1, characterised in that the steam treatment is carried out at from 150 to 230 °C.

**3.** Process according to Claims 1 and 2, characterised in that creosote fractions within the boiling range 100 to 450 °C are treated.

**4.** Process according to Claims 1 and 2, characterised in that creosote fractions within the boiling range 250 to 370 °C are treated.

**5.** Process according to Claims 1 to 4, characterised in that steam is introduced in a quantitative ratio of from 1 : 10 to 10 : 1, preferably from 5 : 1 to 1 : 1, relative to the aromatic fraction, where the treatment duration is 2 hours per cubic metre of aromatic fraction utilised.

**6.** Process according to Claims 1 to 4, characterised in that it is carried out in a continuous manner.

**7.** Process according to Claim 6, characterised in that the aromatic fraction is treated with steam approximately in a ratio of 3.5 : 1 relative to the quantity utilised.

**8.** Use for wood preservation of the wood preservatives prepared by a process according to Claims 1 to 7 with the addition of from 0 to 20 wt-% aryl-, alkylnaphthalenes or isomeric mixtures thereof.

**9.** Use for wood preservation of the wood preservatives prepared by a process according to Claims 1 to 7 with the addition of from 5 to 10 wt-% aryl-, alkylnaphthalenes or isomeric mixtures thereof.

**10.** Use for wood preservation of the wood preservatives prepared by a process according to Claims 1 to 7 with the addition of from 5 to 10 wt-% of a fraction (boiling range: 320 to 350 °C) from naphthalene propylation.

**11.** Use for wood preservation of the wood preservatives prepared by a process according to Claims 1 to 7 in the pressure-vacuum impregnation process at temperatures between 70 and 120 °C.

**12.** Use of the wood preservatives prepared by a process according to Claims 1 to 7 for wood impregnation in the hot-and-cold process.

**Revendications**

**1.** Procédé pour la préparation d'agents de conservation du bois sans odeur à efficacité prolongée à base d'huile d'imprégnation aromatique avec notamment une teneur faible en benzo[a]pyrène, caractérisé en ce que l'on traite des fractions de créosote de point d'ébullition moyen à élevé, les huiles dites d'anthracène, des mélanges de fractions de créosote de point d'ébullition moyen à élevé ou des mélanges d'aromatiques de point d'ébullition moyen à élevé d'une autre origine sans addition d'adjuvant chimique en présence d'air ou de gaz inerte sous agitation à 130 jusqu'à 250 °C avec de la vapeur d'eau.

**2.** Procédé selon la revendication 1, caractérisé en ce que l'on effectue le traitement à la vapeur d'eau à 150 jusqu'à 230 °C.

**3.** Procédé selon les revendications 1 et 2, caractérisé en ce que l'on traite des fractions de créosote dans l'intervalle d'ébullition de 100 à 450 °C.

**4.** Procédé selon les revendications 1 et 2, caractérisé en ce que l'on traite des fractions de créosote dans l'intervalle d'ébullition de 250 à 370 °C.

**5.** Procédé selon les revendications 1 à 4, caractérisé en ce que l'on introduit, pour une durée de traitement de 2 heures par mètre cube de la fraction d'aromatiques mise en oeuvre, de la vapeur d'eau dans une proportion de 1:10 jusqu'à 10:1, de préférence de 5:1 jusqu'à 1:1, rapportés à la fraction d'aromatiques.

**6.** Procédé selon les revendications 1 à 4, caractérisé en ce que la réalisation s'effectue en continu.

**7.** Procédé selon la revendication 6, caractérisé en ce que la fraction d'aromatiques est traitée avec de la vapeur d'eau approximativement dans un rapport de 3,5:1 rapportés à la quantité mise en oeuvre.

**8.** Utilisation pour la protection du bois des agents de conservation du bois préparés d'après un procédé selon les revendications 1 à 7, avec addition de 0 à 20% en poids d'aryl-, alkylnaphtalènes ou de leurs mélanges isomères.

**9.** Utilisation pour la protection du bois des agents de conservation du bois préparés d'après un procédé selon les revendications 1 à 7, avec addition de 5 à 10% en poids d'aryl-, alkylnaphtalènes ou de leurs mélanges isomères.

**10.** Utilisation pour la protection du bois des agents de conservation du bois préparés d'après un procédé selon les revendications 1 à 7, avec addition de 5 à 10% en poids d'une fraction (intervalle d'ébullition : 320 jusqu'à 350°C) provenant de la propylation du naphtalène.

**11.** Utilisation pour la protection du bois des agents de conservation du bois préparés d'après un procédé selon les revendications 1 à 7, dans le procédé d'imprégnation -sous vide- pression de chaudière à des températures entre 70 et 120°C.

**12.** Utilisation des agents de conservation du bois préparés d'après un procédé selon les revendications 1 à 7, pour l'imprégnation du bois dans un procédé chaud - froid.